# EUROPEAN PATENT SPECIFICATION

(11) **EP 1 414 671 B1**
(45) Date of publication and mention of the grant of the patent: **05.04.2006**
(21) Application number: 02750739.1
(22) Date of filing: 29.07.2002
(51) Int. Cl.: B60P 7/08, B66D 1/16

(54) **CLUTCH CONTROLED LOAD-SECURING STRAP TENSIONING SYSTEM FOR TRAILER**
KUPPLUNGSGESTEUERTES GURTSPANNSYSTEM ZUR SICHERUNG VON ANHÄNGERLADUNG
SYSTEME DE TENSION DE COURROIE DE FIXATION DE CHARGE COMMANDE PAR EMBRAYAGE POUR REMORQUE

(30) Priority: 09.08.2001 CA 2354934
(43) Date of publication of application: 06.05.2004
(73) Proprietor: Brunet, Andre, Amos, Québec J9T 3E3 (CA)
(72) Inventor: Brunet, Andre, Amos, Québec J9T 3E3 (CA)
(74) Representative: Hautier, Jean-Louis
(86) International application number: PCT/CA2002/001189
(87) International publication number: WO 2003/013906

(56) References cited:
- GB-A- 2 128 574
- US-A- 3 697 045
- US-A- 5 002 259
- US-A- 5 295 664
- US-A- 5 573 091
- US-B1- 6 350 088

## Description

### FIELD OF THE INVENTION

The invention relates to quick load binding systems for securing and maintaining discrete load elements to a trailer having an open flat bed surface.

### BACKGROUND OF THE INVENTION

During road shipment of discrete goods on an open flat-bed trailer, for example a plurality of elongated logs of wood from a felled delimbed tree, a strap tightening system is required - and is compulsory under government regulations - to maintain the load in place over the trailer flat-bed, so as to prevent accidental fall of the goods from the trailer under road surface borne vibrations. Loads on open trailers can be conventionally held in place by a number of successive wrap-around straps, extending transversely over the top of the load and spaced from one another in a fore and aft direction. Each of these straps is tightened in place by a corresponding winch.

However, due to the surface irregularities bringing a bumpy ride for the trailer pulled by a truck, there is a tendency for these goods to shift during road travel, and therefore, the transverse wrap-around straps become loosened, so that the strap tensioning force applied on the load becomes insuflicient. Periodically after each half hour or so, the truck driver must pull his truck to the side of the road and stop his truck, get out and manually tighten with an elongated one-meter long lever bar once again the flexible strap with a winch. Typically, the applied tensioning load will be about two metric tons for each 10 centimeters wide straps. The lever bar engages through a bore at the free end of the winch shaft.

Such a conventional load tightening system is physically demanding for the truck driver, with eventual back pain injuries that can follow after a while. It is inconvenient for the truck driver, when the weather is bad: heavy rain, ice or snow. During road travel, it generates anxiety with the truck driver, as the latter is never sure when exactly the load needs to be re-tightened; also it may take some time before the next upcoming suitable road side space becomes available for temporarily parking the trailer to check the tightening of the load, thus again generating nervousness in the truck driver never knowing if part of his load will accidentally release the flat-bed of his trailer and undesirably fall down onto the road, before he can reach the next upcoming curbside road park space. Moreover, such a load tightening system does constitute a safety hazard for both this truck driver and incoming motorists, because the truck driver has to work on the side of the road, sometimes at night, with an elongated bar projecting away from the truck and partly across the road where incoming motorists may not see the truck driver. Also, such a load tightening system is unreliable since it does not enable the truck driver to uniformly adjust the proper tensioning for each and every strap during road travel. Also, because there may be for example around twelve (12) such transverse straps and strap tensioners on a typical flat bed open trailer, and the truck driver needs to crank each strap winch individually, load tightening is a tiresome and lengthy business.

In British patent application No. GB2128574 to Valentin, there is disclosed a wind-up and tensioning device for a belt intended to retain a load transported on a vehicle. A rotatable belt drum can, by means of operation of a lever, be engaged with a drive motor to wind up the belt on the drum to its entire length or to the amount required to tension it around the load, whereby simultaneously a stop mechanism is engaged which prevents rotation of the drum in an unwinding direction. By means of the lever the drum can, further, be disengaged from the drive motor for manual unwinding of the belt, whereby the stop mechanism is simultaneously disengaged.

U.S. Patent No. 5,295,664 to KAEMPER discloses an electromotor driven tensioning and winding device for lashing straps in integral construction, including a tactile three-point measurement sensor in direct contact with a flat side of the lashing strap. The measurement sensor includes a sensor bar which is mounted against a compression spring element and has a contact pin which is movable together with the sensor bar and can be pressed against a contact plate fastened to the rear wall of the measurement sensor housing. If the desired tension of the lashing strap is reached, the contact pin lies against the contact plate . If the contact between the contact plate and the contact pin is interrupted, the drive motor receives a signal to tighten the lashing strap by further winding it onto the wind-up spindle. The desired lashing tension of the lashing strap is thus regulated continuously.

### OBJECTS OF THE INVENTION

An object of this invention is to enhance operational safety of flat bed open trailers carrying a plurality of discrete goods.

Another object of this invention is to tighten in a single operation all strap winches of such a flat bed trailer.

Another object of the present invention is to increase efficiency of operation of flat bed open trailers.

Another object of this invention is to reduce the likelihood of work related bodily injuries by truck drivers operating such flat bed trailers.

Another object of this invention is to provide an efficient and reliable manual override clutch system, for enabling immediate deactivation of the strap tensioning whenever needed by the operator.

### SUMMARY OF THE INVENTION

In accordance with the objects of the invention, there is disclosed a strap winch device assembly for fitting to a truck trailer, to periodically tighten the load supported by the open trailer. This load tightening can be performed either automatically, at set intervals (for example regular intervals), or remotely by the truck driver without having to leave his driving cabin. A number of these winch devices are connected to a single fore and aft drive shaft, which is rotatably carried by and extends along the side of the trailer. The drive shaft is driven by a motor to tighten any straps that loosen when the trailer is in motion over the road. Trailer load distribution typically shifts during road travel, due to road-induced vibrations.

More particularly, the present invention introduces a pneumatic system for automatically - or by remote control- providing tightening load on the wrap-around straps, so that the trucker does not need to periodically stop on the side of the road, and get out of his cab, to manually re-tighten his load with the straps. To the winch cable tightening system, there is added an elongated shaft which extends along the side of the full length of the trailer, and which drivingly engages a pneumatic motor at the front end of the trailer. This motor is periodically activated during road travel, for short durations each time. This can be done either automatically, at set intervals, or by remote control, at the discretion of the truck driver inside his cab. Upon reaching shipping destination, some of these cable tightening assemblies corresponding to the registering load units to be unloaded, are released manually by a clutch release handle.

This strap tensioning system includes an integral tension limiter, that constantly maintains the tension on the load-tightening straps, contrarily to conventional manual load tightening systems. The automatic tightening system operates thanks to a safety ratchet member, including a locking pawl, to maintain the tightening load without having to continuously maintain in operation the drive motor.

The tightening system mechanism includes three different gear wheels. One gear wheel is located on the drive shaft, the second gear wheel is located on the drum, and the third and last gear wheel interconnects the first and second gear wheels. The third gear wheel is provided with a spring biased system which becomes inoperative when the required tensioning force is reached. This third gear wheel also enables the user to deactivate the drum of the drive shaft with the clutch release arm, to alternately enable a manual operation or the dismantling of the straps.

Also, the strap tensioning devices are.slidingly mounted along the elongated motor shaft, so that their relative fore and aft position along the trailer flat bed can be adjusted to fit any type of load. The transmission shaft is for example cross-sectionally hexagonal, but other suitable shapes, most preferably polygonal, or other configurations, e.g. a knurled surface on an otherwise cylindroid shaft, could be used, provided they allow transmission of power from the motor to the tightening devices.

More particularly, the invention relates to a strap tightening system for use in securing a load with a wrap-around strap over a flat bed open trailer, said system comprising:
- at least one strap tensioning unit, including:
   a) a main frame, to be mounted to the trailer;
   b) a strap winding member, rotatably mounted to said main open frame and lockingly engageable by one end portion of the strap;
   c) a gear assembly, rotatably mounted to said main open frame; - a motor, to be mounted to the trailer at a distance from said tensioning unit and to be connected to a power supply;
- a drive shaft, operatively interconnecting said tensioning unit gear assembly and said motor, said drive shaft bringing said strap winding member to rotate upon actuation of said motor;
- characterized in that said strap tightening system further comprises a clutch assembly, operatively interconnecting said gear assembly and said cable winding member, wherein upon the load applied by the tightening strap onto said cable winding member exceeding a set threshold, said clutch assembly disconnects said gear assembly from said cable winding member.A manual clutch release member may be added, for manually disconnecting said gear assembly from said cable winding member.

A manual clutch release member may be added, for manually disconnecting said gear assembly from said cable winding member.

A manual strap tightening device could also be added, being associated with said strap winding member, for tightening said strap independently of said drive shaft. A rail member could also be added, said rail member including a first portion, to be anchored to the trailer flat bed in a fore and aft direction, and a second portion, slidingly retaining said strap tensioning unit open frame, wherein the relative position of said strap tensioning unit device can be slidingly adjusted along the length of the trailer in accordance with the relative position on the trailer bed of the load to be secured.

It would also be envisioned to add a safety ratchet and pawl assembly, mounted to said main frame and cooperating with said strap winding member, said safety ratchet and pawl assembly preventing said strap winding member from unwinding once said motor is deactivated.

There may be at least a few strap tensioning units, and preferably between eight and fourteen (8-14), located spacedly from one another and adjustable movable relative to one another along said rail member.

The invention also relates to a method of securing a load on a flat bed trailer with at least one strap tightening unit, the strap tensioning unit of the type having a main frame, to be mounted to the trailer, a strap winding member, rotatably mounted to the main open frame and lockingly engageable by one end portion of the strap, a gear assembly, rotatably mounted to said main open frame, and a clutch assembly, operatively interconnecting said gear assembly and said cable winding member; wherein said method comprises the following steps:
a) extending the strap transversely over a selected portion of the trailer load carrying bed;
b) engaging an inner end portion of the strap around said strap winding member,
c) applying a rotational force on said strap winding member to tighten said strap against the load on the trailer bed;
d) characterized in that said method of securing a load further includes the following additional step: allowing said clutch assembly to disconnect said gear assembly from said cable winding member, once the load applied by the tightening strap onto said cable winding member exceeds a set threshold;
e) locking said cable winding member at its threshold load with a lock member,
f) releasing said rotational force on said strap winding member.

The following additional step (aa) could intervene before said step (a): adjusting the position of said strap tensioning unit along the trailer, to register with the load on the trailer bed. Also, there could be a number of such said strap tensioning units; so that the following additional step would be involved in this method, intervening between said steps (aa) and (a): adjusting the position of the other said strap tensioning units relative to one another, to adapt to the load distribution on the trailer bed.

The invention also relates to a load tightening device for use in securing a load with a wrap-around flexible strap over a flat bed trailer, said device comprising:
- a main rigid frame, to be anchored to the trailer,
- a winding member, rotatably mounted to said main frame and to be connected to the load securing strap for winding the latter,
- power means, for power operating said winding member to wind the strap; - power transmission means, operatively interconnecting said winding member and said power means;
- clutch means, deactivating said power transmission means once the torque applied by the tightening strap onto said strap winding member exceeds a set threshold and said strap winding member reaches a threshold winded state; and
- lock means, maintaining said strap winding member in its threshold winded state once said power means is deactivated.

Said gear assembly could include a ring gear, a drive gear integral to said drive shaft and intermeshing with said ring gear; and wherein said clutch assembly includes a clutch casing, mounted radially inward of said ring gear, said clutch casing including a number of radial recesses, a biasing member fully engaged into each of said radial recesses, and a bearing member mounted into each of said radial recesses radially outwardly of said biasing member, said ring gear defining a radially inner edge portion having a number of cavities in register with corresponding said radial recesses, each of said ring gear cavities sized to complementarily accommodate a fraction of a corresponding bearing member, each said bearing member biased by a corresponding one of said biasing members radially outwardly toward and against a corresponding one of said ring gear cavities, said set load threshold being a function of said biasing member.

There could also be added load adjusting set screws, each of said set screws mounted into a corresponding one of said radial recesses radially inwardly of said biasing member, said set screws enabling an operator to manually adjust said set load threshold.

Said power means could include a drive shaft, to be rotatably carried by the flat bed trailer, and a drive gear, carried by said drive shaft; and wherein said power transmission means includes an idle shaft, mounted to said main rigid frame, and an idle gear, rotatably mounted to said idle shaft coplanar to said drive gear and releasably meshingly engaged with said drive gear and operatively engaged with said clutch means. In that case, a manual override clutch system could be provided, for manually releasing said idle gear from said drive gear. More particularly, said idle shaft could include one and another segment, the latter being axially offset relative to said one segment, said one segment and said another segment providing eccentric motion of said another segment relative to said one segment upon rotation of said idle shaft and accordingly, translational displacement of said idle gear relative to said drive gear, such that a manual override clutch system is obtained by rotating said idle shaft for a fraction of a turn which manually releases said idle gear from said drive gear.

### DESCRIPTION OF THE DRAWINGS

In the annexed drawings :
Figure 1 is a perspective view of a three-axle trailer, fitted with a load tensioning system according to a preferred embodiment of the invention;
Figure 2 is a cross-sectional view of an intermediate section of the trailer, at an enlarged scale relative to fig 1, showing the load tensioning device according to a first embodiment of the invention being fitted along the lateral edge of the trailer platform bed underface;
Figure 3 is an enlarged perspective view of the first embodiment of load tensioning device, with the gear wheels removed for clarity of the view;
Figure 4 is a view similar to fig 3, but at a smaller scale and further showing two of the gear wheels and the drive gear and a portion of associated drive shaft;
Figure 5 is a view similar to figure 3, but at a smaller scale and from another side of the load tensioning device;
Figure 6 is an exploded view of the gear assembly of the first embodiment of load tensioning device shown in figure 3;

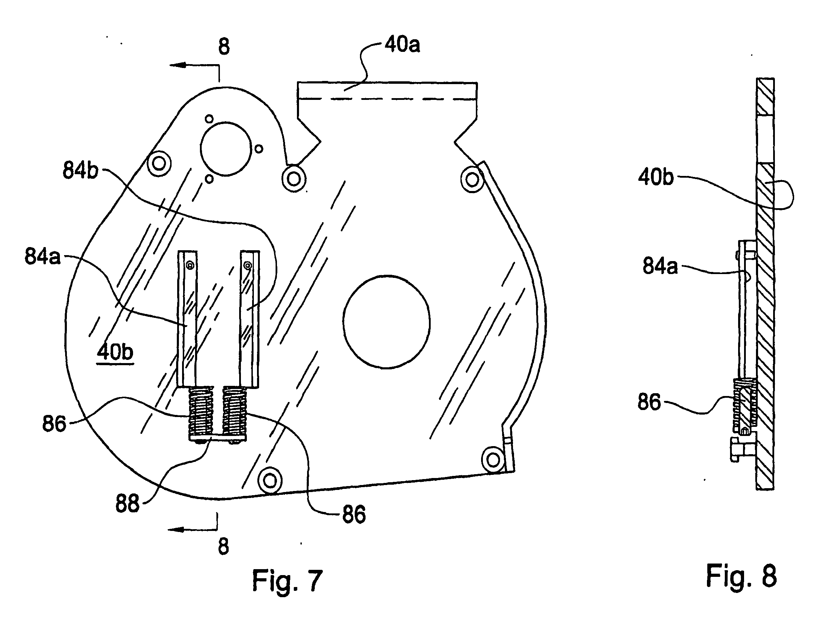

Figure 7 is a plan view of part of one wall from the frame of the load tensioning device shown in figure 3, with the gear assembly removed;
Figure 8 is a cross-sectional view taken along line 8-8 of fig 7;
Figure 9 is an enlarged perspective view of the clutch member forming part of the present load tensioning device;
Figure 10 is a perspective view of the spring discoid support forming part of the clutch member of fig 9, showing in phantom lines the radial cavities for receiving the biasing coil springs;
Figure 11 is a perspective view of the tensioning strap engaging arm of the strap tightening device;

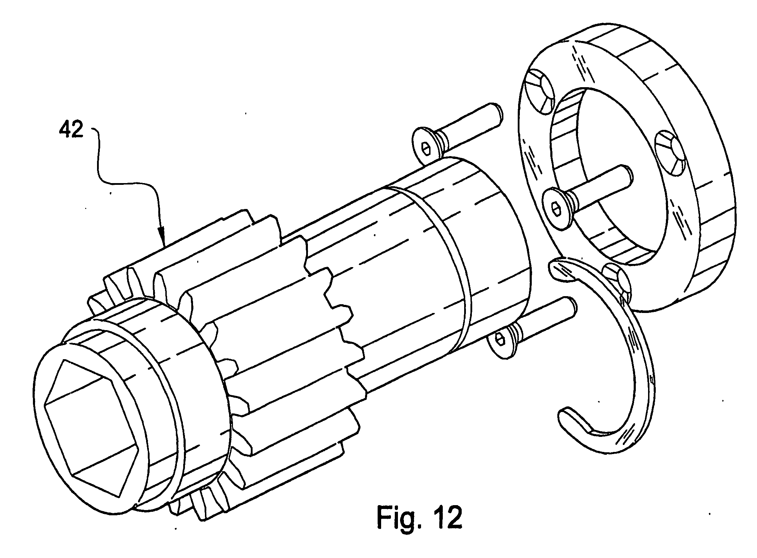

Figure 12 is an exploded view of the drive gear assembly of the strap tightening device according to the invention;
Figure 13 is a view similar to fig 7 but at a smaller scale and further showing the first embodiment of clutch release assembly with the handle clutch in its released, "power ON" condition;
Figure 13a is similar to fig 13, but at a larger scale and with the handle clutch being engaged in its "power OFF" condition;
Figure 14 is an enlarged plan view of the safety ratchet forming part of the strap tightening device;
Figure 15 is an enlarged plan view of the ratchet pawl for edgewise engagement with the ratchet of fig 14;
Figure 16 is a plan view of the strap tightening device and associated first embodiment of manual clutch release system, suggesting in see-through fashion how the various gear wheels interact with one another;

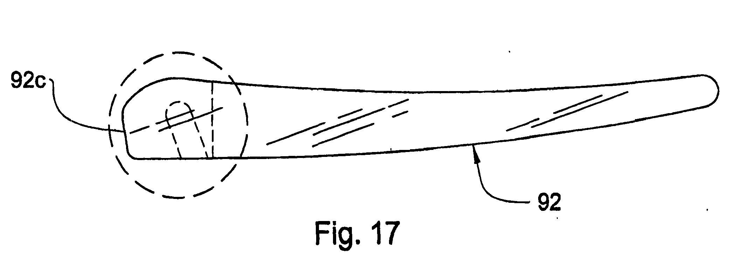

Figure 17 is a plan view of the clutch release handle from the first embodiment of strap tightening device;
Figure 18 is a schematic view of the trailer mounted drive shaft, showing the drive motor mounted intermediately in between two load strap tensioning units;
Figure. 19 is a view similar to figure 3, but showing a second embodiment of load tensioning device including an alternate system for manual clutch override of the tensioning device;
Figure 20 is a view similar to figure 5, but for the second embodiment of load tensioning device;
Figure 21 is a view similar to figure 4, but for the second embodiment of load tensioning device and with the manual clutch release lever arm removed therefrom for clarity of the view;
Figure 22 is an exploded view of the eccentric axle assembly forming part of the manual clutch override system from the load tensioning device of figure 19;
Figures 23 and 24 are a plan view and an end view respectively of the eccentric axle assembly of figure 22, but in assembled condition; and
Figure 25 is a perspective view of the manual clutch release lever arm of the load tensioning device of figure 19.

### DETAILED DESCRIPTION OF THE EMBODIMENTS

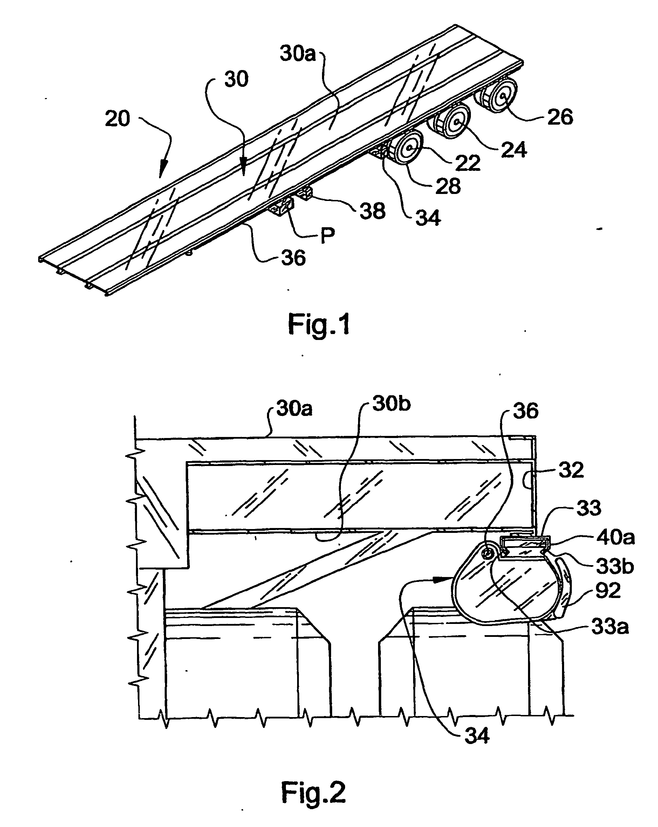

In figures 1 and 2 of the drawings, there is shown a flat-bed trailer 20 of the open type, i.e. with no side walls, tail gate or ceiling. Trailer 20 is adapted to be towed by a truck (not shown) at the front end thereof. Trailer 20 includes for example three axles 22, 24, 26, with ground supporting end wheels 28 at the rear end portion of the trailer. A flat bed 30 enables support of a load of discrete commercial articles - for example, a plurality of wood logs from felled delimbed tree - on the top surface thereof, 30a. A reinforced iron angle 32 is mounted on each lateral side edge of the flat bed 30, joining the top surface 30a to the underface 30b of the flat bed 30. A fore and aft extending rail 33 is preferably anchored to the underface of one iron angle 32. Rail 33 includes downturned laterally opposite flanges or lips 33a, 33b. Lips 33a, 33b, are slightly inwardly inturned, as shown.

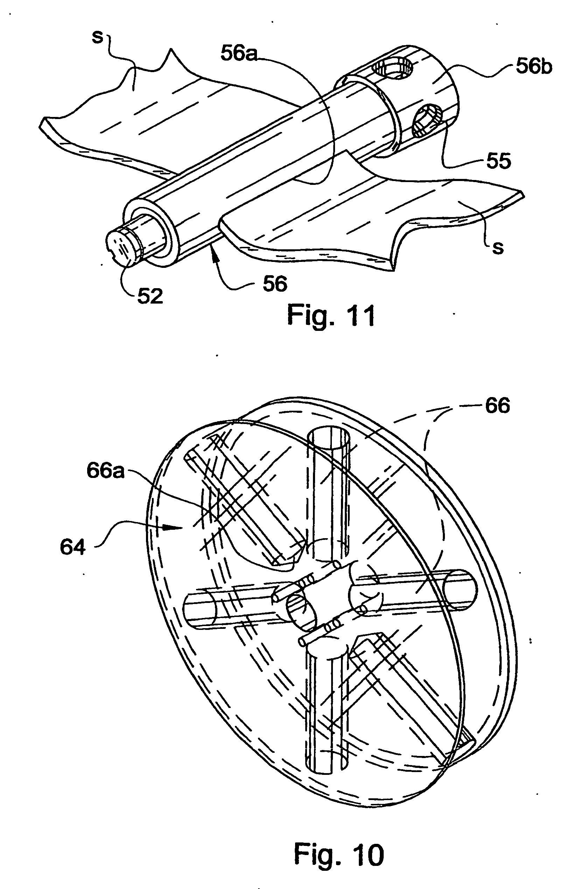

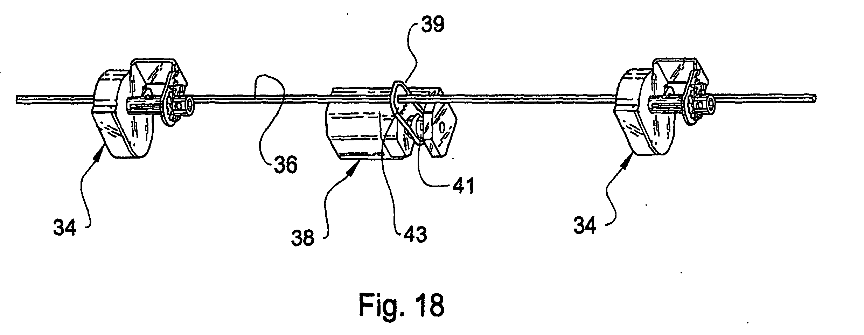

In accordance with the teachings of the invention, there is provided at least one strap tightening device 34, being mounted slidingly into rail 33. Each strap (fig.11) is destined to be anchored at one end to an anchor point on one lateral side of the trailer flat bed, and to be connected to the strap tightening device 34 at the opposite end thereof. Preferably, there are at least a few such tightening devices 34, 34, 34, ... being positioned in fore and aft register and spaced fashion relative to one another on the same lateral side edge of the trailer. An elongated rotatable shaft 36 extends through and joins all these tightening devices to one another. As shown in fig 18, a motor, preferably an electric motor 38, is mounted at an intermediate section of the trailer in fore and aft register with the shaft 36. Electric motor 38 is connected to a power supply P, for example electrically connected to the alternator of the truck by electrical line, not illustrated, or to a 12 volts battery P. Shaft 36 engages with the motor 38 via an endless chain 39 meshing with a first gear 41 rotatably integral to a motor drive shaft, and with a second gear 43 rotatably integral to shaft 36. The cross-section of shaft 36 should preferably be polygonal, most preferably hexagonal, to enable transmission of power from the motor 38 to the tightening devices 34; but other alternate securing means could also be provided, e.g. knurling of the outer surface of the shaft 36, although this may be less effective or shorter lasting.

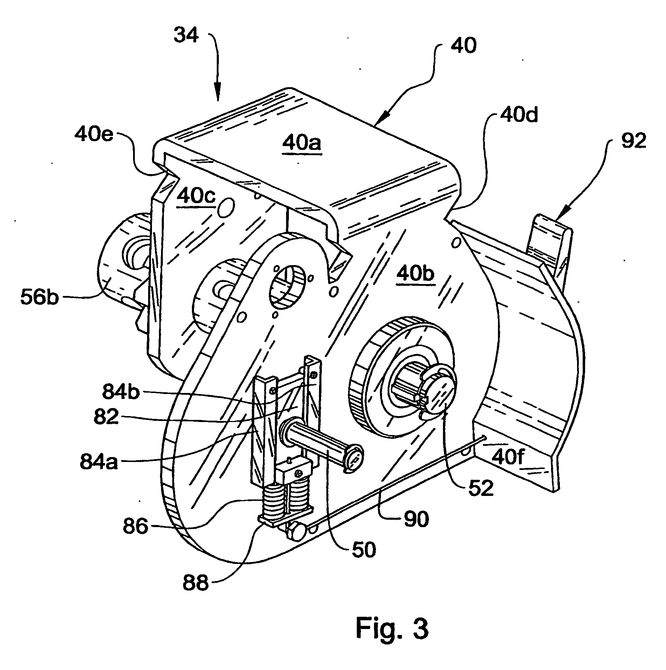

According to a first embodiment of the invention, illustrated in figures 3 to 5 and 13-13a of the drawings, there is provided a strap tightening device 34. Device 34 includes a generally U-shape open main frame 40, defining a web leg 40a and two side legs 40b, 40c. Web leg 40a is sized to slidingly fit inside and be retained by cross-sectionally U-shape rail 33 of trailer 20, as suggested in figure 2 of the drawings. The portion of frame legs 40b, 40c, adjacent web leg 40a, form narrowed necks 40d, 40e, respectively, to slidingly accommodate the inturned lips 33a, 33b, of the trailer rail 33, so as to enable the rail lips 33a, 33b, to support tensioning unit 34 freely over ground. Accordingly, the main frame web leg 40a is preferably sized and shaped for sliding fore and aft engagement with rail element 33. Alternately, leg 40a and rail 33 could be integral to one another, although the sliding adjustment capability is preferred for convenience of the user.

Gear wheels 42, and ring gear 44, are rotatably mounted to the exterior face of main frame leg 40c by axles 36a, 50, respectively, while another gear wheel 46 is rotatably mounted to the same exterior face of main frame leg 40c by a shaft 52. Shaft 50 is an idle rotatable shaft. Another gear wheel 54 is rotatably mounted to the exterior face of main frame leg 40b by a strap tensioning shaft 56. Shaft 56 is coaxial and integral to shaft 52, and diametrally larger relative thereto, and includes a lengthwise slit 56a for locking insertion engagement by one end portion of a load-tightening strap (not shown).

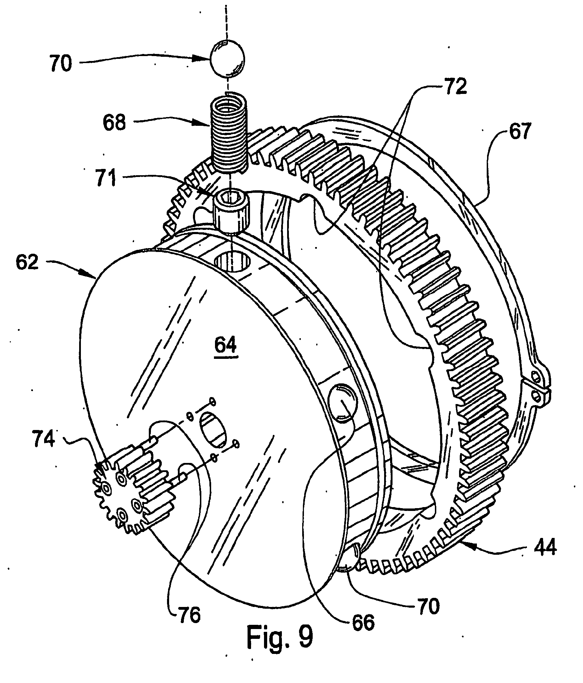

Diametrally smallest drive gear wheel 42 meshes with diametrally larger ring gear 44 in the same plane, whereas diametrally larger gear wheel 46 is offset from the plane of gears 42 and 44. Moreover, another small gear wheel 74 (fig 9) associated with ring gear 44, meshes with gear wheel 46 and is coplanar therewith. Ratchet gear 54 is coaxially mounted to shaft 56 integral thereto.

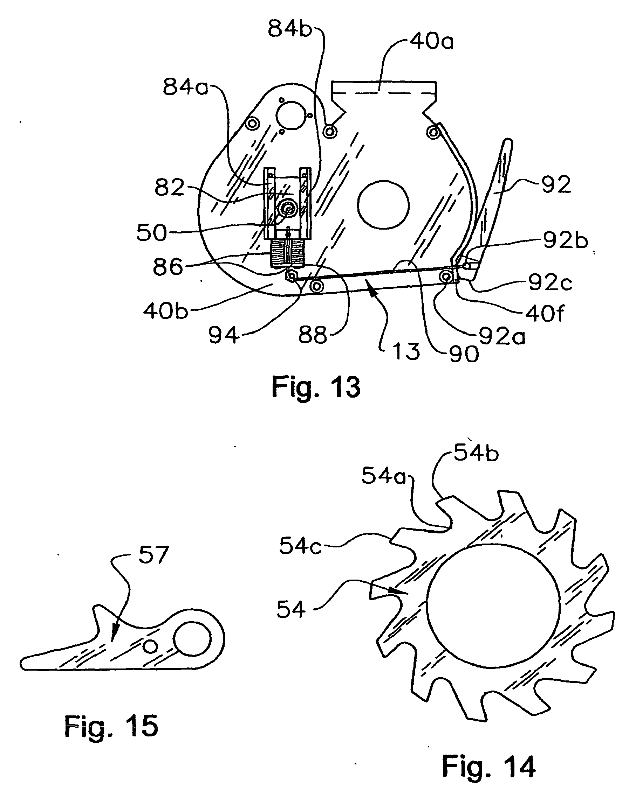

Rotation of gear wheel 54 opposite gears 42-46, is controlled by a pawl 57 rotatably mounted to main frame leg 40b by a pivotal pin 58. Pawl 57 registers tangentially with and is coplanar to gear 54, and is adapted to engage a selected one of the peripheral recesses 54a (fig 14) formed between a successive pair of teeth 54b, 54c, of gear 54, so that gear 54 and pawl 57 form together a ratchet assembly.

Preferably, the outer end portion 56b of tensioning shaft 56 is enlarged and includes one or two radial through channels 55, for through engagement by a section of an elongated tubular lever bar (not shown), for alternate manual rotation of the tensioning shaft 56 for enabling release of tensioning when unloading is required, or in the event motor 38 become defective or a component of the tightening unit 34 breaks.

The axle 36a of diametrally smallest gear 42 is formed by a segment of the cross-sectionally polygonal drive shaft 36, that brings power from the front motor 38 to the main ring gear 44 via intermeshing gear wheel 42.

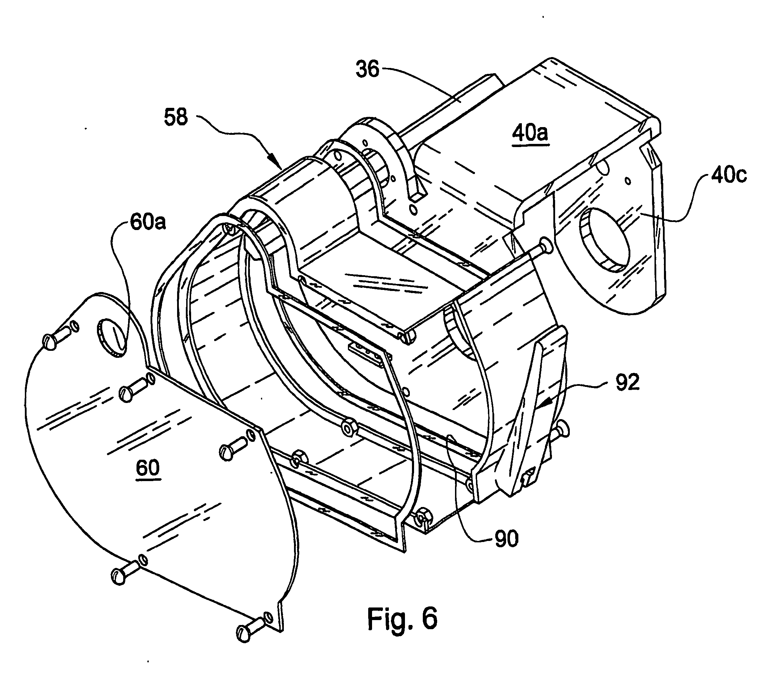

As illustrated in fig 6, the gears 42, 46, 74, and ring gear 44 are preferably rotatably sealed inside a closed weatherproof casing 58. The cover 60 of casing 58 includes a bore 60a for free rotatable passage of the cross-sectionally polygonal drive shaft 36.

As shown in figures 9-10 and 16, a clutch assembly 62 is mounted radially inwardly of ring gear 44. Clutch assembly 62 includes a discoid casing 64 having a number of deep cylindroid radial recesses 66. Casing 64 may be for example about 30 cm in diameter and between 15 and 35 cm in thickness. Recesses 66 may be conical at their radially inner end 66a. Casing 64 is sized to fit snugly radially inwardly of ring gear 44. Casing 64 may be constructed as a hollow wheel, with a diametrally smaller rim flanked by opposite rim flanges. A C-shape retaining ring 67 interlocks ring gear 44 and clutch casing 64, by wedging. A coil spring 68 extends fully into each radial recess 66. A free spheroid steel body 70, e.g. of about 13 mm in diameter, is mounted at the radially outward end of the coil springs 68, and a hexagonal socket set screw 71 is mounted at the radially inward end of each radial recess 66. Set screws 71 are complementarily shaped to the radially inner conical end 66a of radial recesses 66. Shallow arcuate recesses 72 are provided on the radially inward face of ring gear 44, in register with corresponding radial recesses 66 of discoid casing 64 when fitted therein. Each hemispheric recess 72 is sized to snugly receive a half section of a corresponding spheroid body 70. The size of the steel balls 70 is a function of the diameter of the ring gear 44. A small gear wheel 74 is anchored by anchor screws 76 flatly against discoid casing 64 coaxially thereto. Gear wheel 74 is coplanar to and meshes with tensioning gear 46. Stationary pivot axle 50 rotatably support both ring gear 44 - via clutch casing 64 - and gear 74.

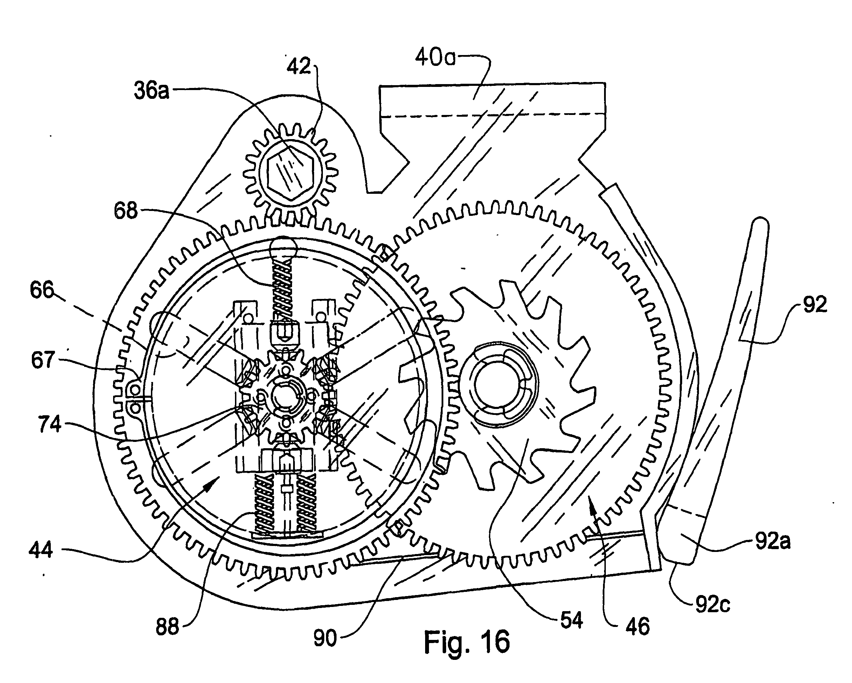

It can now be understood that as drive shaft 36, powered by main electric motor 38, rotates drive gear 42, intermeshing ring gear 44 is brought in rotation therewith. Under the radially outward biasing force of the coil springs 68, the spherical balls 70 forcibly engage into the corresponding registering radially inward recesses 72 of ring gear 44, thus providing releasable frictional interlock engagement between ring gear 44 and discoid casing 64. As casing 64 is brought into rotation by its interlock engagement with ring gear 44, integral small diameter gear wheel 74 is concurrently brought into rotation. Since gear wheel 74 and tensioning gear 46 intermesh with one another (fig 16), gear 46 is concurrently brought into rotation. Accordingly, the strap end portion locked into shaft slit 56a can become progressively wound around the intermediate body portion of tensioning shaft 56, under power from the main electric motor 38.

However, once the strap or belt has been sufficiently wound around tensioning shaft 56, resistance is felt due to the strap that has become already substantially tightened around the load. At that time, beyond a set torque threshold - adjustable by rotating adjustable set screws 71 inside radial recesses 66 -, the radial springs 68 inside the clutch casing 64 will yieldingly move radially inwardly, thus releasing the frictional interlock between the discoid casing 64 and the ring gear 44. This torque threshold may be within the range of about 1360 to 2270 kilograms, and preferably about 1810 kg.

The clutch 62 has therefore come into action, whereas rotational power transmitted from drive gear 42 to ring gear 44 is no longer able to be transmitted to tensioning shaft gear 46, since intermeshing gear 74 - being integral to now stationary discoid clutch casing 64 - does not rotate anymore.

Therefore, with the present device, once the set tightening load for the load securing strap has been reached, power from the motor 38 will stop being transmitted to the strap tightening shaft 56.

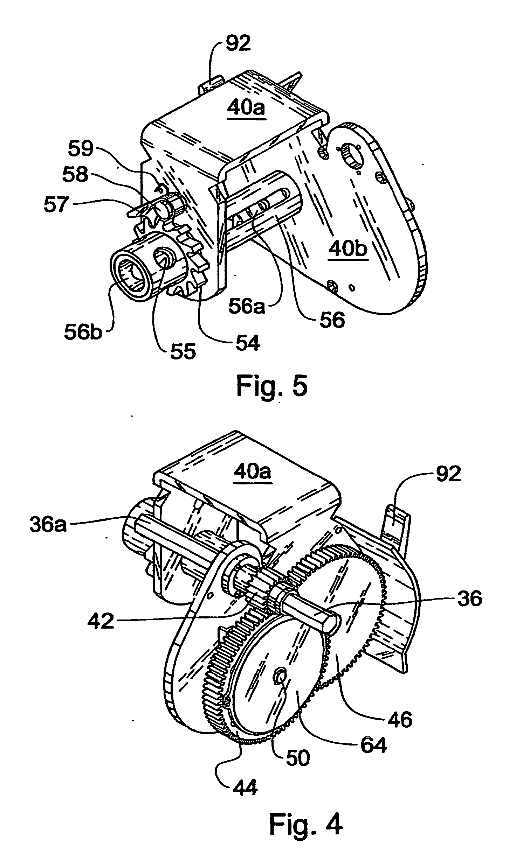

Moreover, the tightened strap will remain taut by the pawl 57 having engaged the ratchet gear 54. A biasing spring 59 (fig 5) carried by frame wall 40c and connected to pawl 57, prevents pawl 57 from accidentally releasing the selected peripheral recess 54a of the ratchet gear 54.

Manual override of the strap tightening force can be achieved by actuating a manual clutch override system, of which a first embodiment 80 is shown in fiugres 3, 13-13a and 16 of the drawings. Manual clutch override system 80 includes a slider plate 82, integral to the inner end of gear shaft 50, and a pair of cross-sectionally L-shape guide rail members 84a, 84b, anchored to the outer face of frame wall 40b and slidingly retaining the slider plate 82 therebetween. Rails 84a, 84b, extend parallel to one another, in directions both normal to a virtual line joining shafts 50 and 52, and parallel to a virtual line joining shafts 50 and 36a.

Slider plate 82 is biased into its operative normal position, where ring gear 44 and drive gear 42 intermesh, by a pair of coil springs 86, being integrally supported to main frame leg 40b by a bracket 88.

A metallic cable 90, e.g. of a size about 1.6 mm in diameter, is connected at one end to the end portion of slider plate 82 adjacent the biasing springs 86, and at the other end to a clutch release handle member 92. By manually actuating handle member 92, cable 90 is pulled, thus bringing slider plate 82 into motion against the bias of coil springs 86. The pulling force of cable 90 brings in effect the shaft 50 away from the drive shaft 36a, and therefore the whole ring gear 44 away from the drive gear 42, whereby gears 42 and 44 come to release each other so that no gear intermeshing occur therebetween. This release of the intermeshing between gears 42 and 44 therefore provides release in the strap tensioning at the level of tensioning shaft 56.

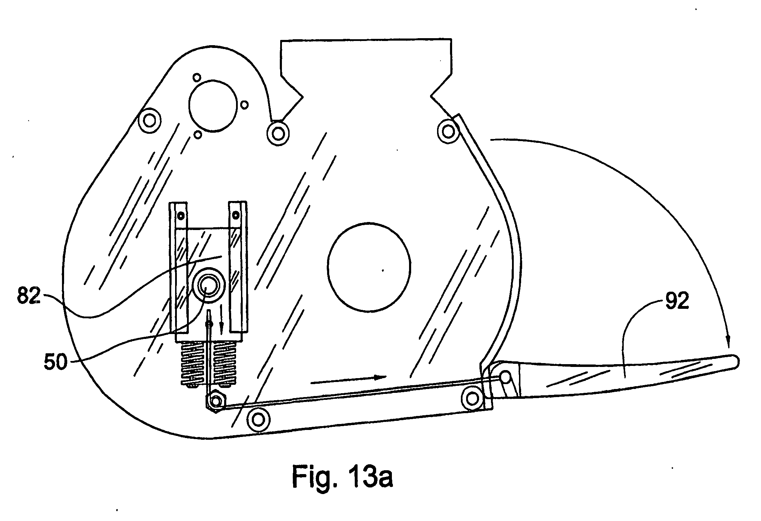

More particularly, handle 92 defines a pivotal yoke end 92a, pivotally mounted to main frame 40. Cable 90 extends freely through a main frame flange 40f, extending orthogonal to main frame wall 40b, and joins with an anchor stud 92b of handle 92 proximate pivotal yoke end 92a. Main frame flange 40f forms a seat for the handle free inner end 92c, intermediate pivot mount 92a and cable anchor stud 92b. Accordingly, as handle 92 is brought downwardly outwardly from its generally upright condition shown in figure 13, the handle inner end 92c frictionally engages seat 40f, thus moving studs 92a and 92b away from one another, thus pulling cable 90 therewith. A sliding corner shoulder 94 is preferably mounted to wall 40b proximate bracket 88, for sliding engagement by cable 90, to enable location of handle 92 to be more conveniently laterally positioned to the tightening unit 34 as shown in figure 13, rather than beneath same.

Manual release of the clutch release handle 92 brings once again the gear shaft 50 into operative position, since shaft 50 is able to yield to the bias of the coil springs 86.

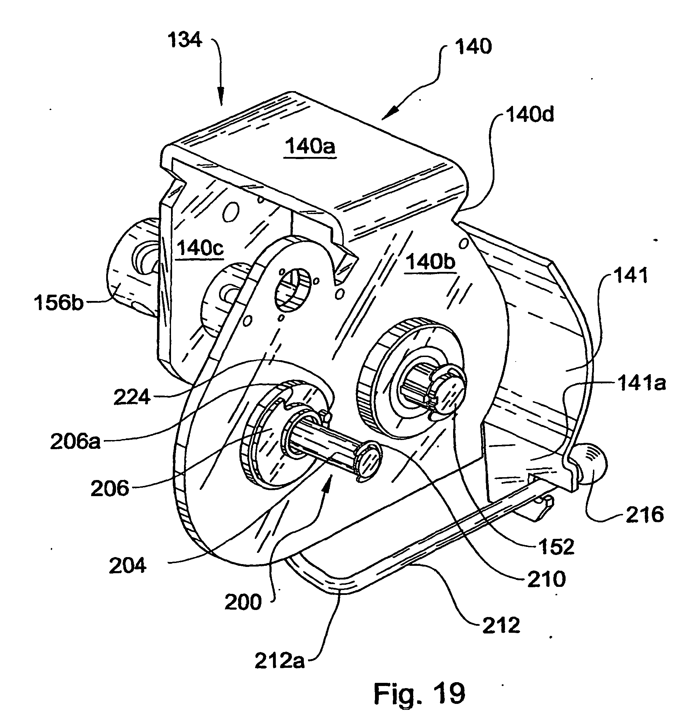

A second embodiment of strap tightening device is disclosed as 134 in figures 19 to 25 of the drawings. Strap tightening device 134 discloses an alternate system for manual clutch override. All features in the second embodiment of tightening device, 134, corresponding to those in the first embodiment of tightening device, 34, have been identified in figures 19 to 25 by the same reference numerals, but now being in the 100 series: for example, element 34 becomes element 134.

Again, the strap tightening device 134 includes a generally U-shape open main frame 140, defining a web leg 140a and two lateral side legs 140b, 140c integral to web 140a. A flange 141 transversely projects from wall 140b in a direction opposite wall 140c. Diametrally smaller gear wheel 142, and ring gear 144, are rotatably mounted to the exterior face of main frame leg 140c, opposite flange 141, by axles 136, 200, respectively, while gear wheel 146 is rotatably mounted to the same exterior face of main frame leg 140c by a shaft 152. Gear wheel 154 is rotatably mounted to the exterior face of main frame leg 140b by a strap tensioning shaft 156. Shaft 156 is coaxial and integral to shaft 152, and diametrally larger relative thereto, and includes a lengthwise slit 156a for locking insertion engagement by one end portion of the load-tightening strap (fig 11).

As in the first embodiment of tightening device, coplanar gears 142 and 144 mesh with one another, whereas gear wheel 146 is offset from gears 142 and 144. Offset gear wheel 146 is adapted to mesh with the coplanar small gear wheel (not shown, but corresponding to element 74 in the first embodiment) from the automatic clutch assembly (not shown in figures 19-25, but similar to the one illustrated in figure 9). Pawl 157, pivotally carried to wall 140c by pivot mount 158, also lockingly yet releasably controls rotation of coplanar diametrally smaller gear wheel 154.

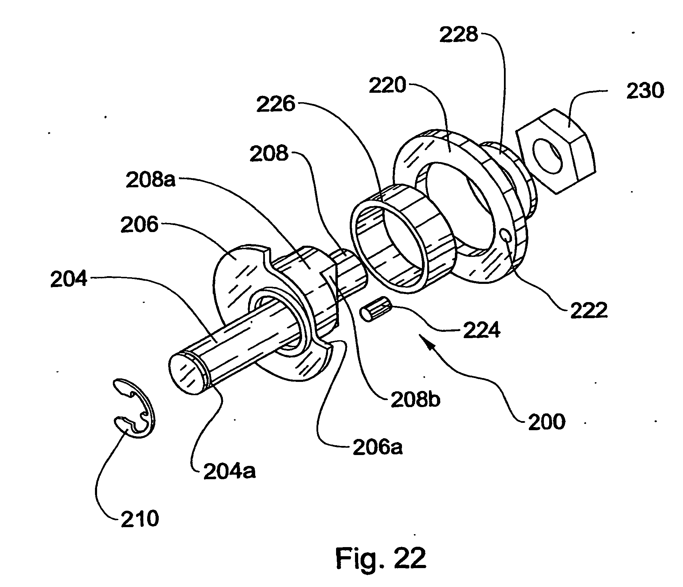

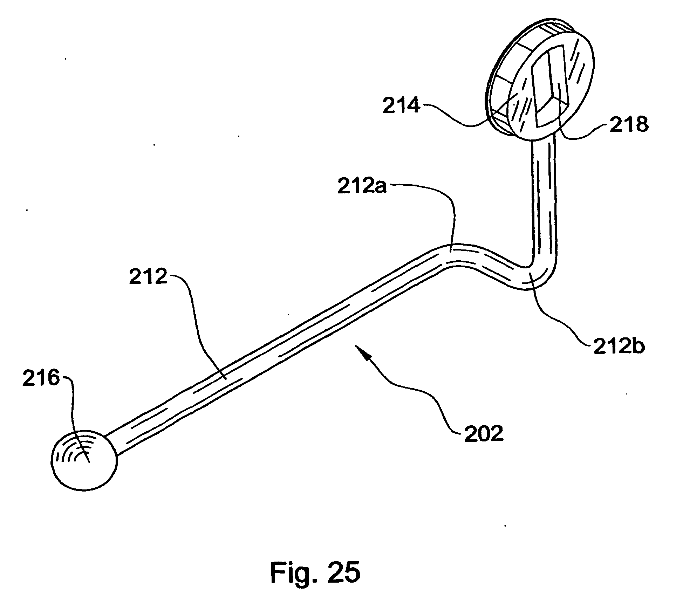

In the second embodiment of tightening device 134, the cable, slider and spring assembly 50, 82, 88, 90 and 92 (see figure 13a) from the first embodiment of tightening device 34, is replaced by an eccentric shaft assembly 200 operatively connected to an elbowed lever arm member 202. This shaft assembly 200 is shown in figures 22-24, while the lever arm member 202 is illustrated in figure 25.

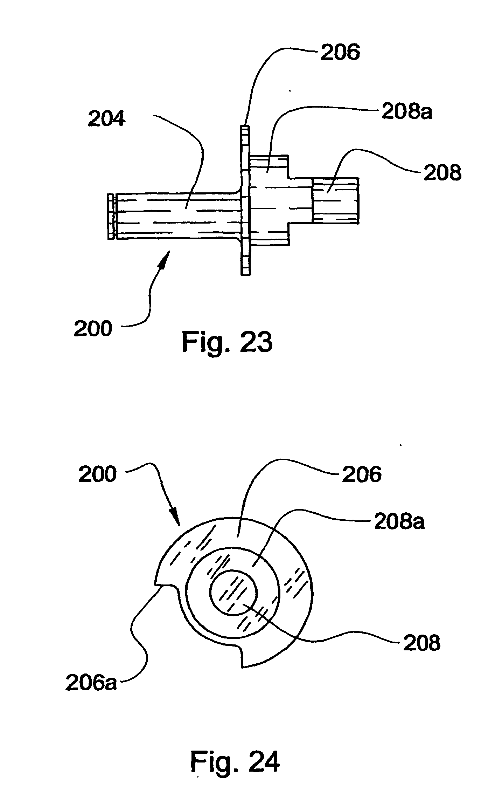

Shaft assembly 200 includes a rod 204 with an integral ring flange 206 at one end thereof. A stud 208 projects from flange 206 on the opposite side of rod 204. As best shown in figure 23, rod 204 and stud 208 are axially offset relative to one another. Stud 208 includes a cylindroid inner enlargement 208a, adjacent ring 206. Stud enlargement 208a includes an outer notch 208b, opposite ring 206. Ring 206 also includes a sector shape cut-out notch 206a, making about a quarter of the total periphery thereof. Rod 204 is cylindroid. Stud 208 is cross-sectionally polygonal, for example rectangular in cross-section.

Stud 208 extends through and beyond wall 140b, while rod 208 rotatably supports ring gear 144. A clip 210 is engaged into an annular recess 204a at the free end of rod 204, to retain gear wheel 144 in position. As shown in figure 19, sector flange 206 abuts against wall 140b.

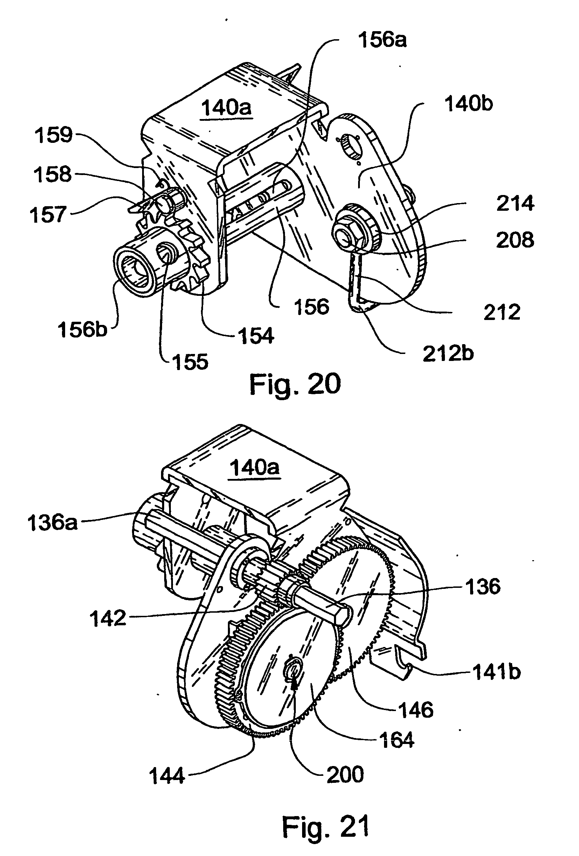

Lever arm 202 consists of an elongated rod 212, having an integral axial socket 214 at one end and a handle 216 at the opposite end. Rod 212 includes two spaced elbowed portions 212a, 212b, proximate socket 214. Handle 216 may be for example a spheroid end enlargement of rod 212. Socket 214 includes a polygonal through-bore 218, for example rectangular as illustrated. As suggested in figures 19 and 20, elbowed rod sections 212a, 212b, are sized to conformingly fit around the bottom edge portion of wall 140b; and the through bore 218 of socket 214 is sized for mating through engagement by stud 208 of shaft assembly 200, and complementarily shaped therewith. The lower section 141a of flange 141 includes a laterally outturned notch 141b, for through passage of rod 212 and for retention of handle 216 on the side of flange 141 opposite shafts 150 and 152.

As suggested in figure 22, an inner ring 220 is provided rotatably around stud enlarged section 208a. Ring 220 includes a peripheral cavity 222 receiving therein a fraction of the length of a pin 224. Pin 224 projects beyond cavity 22 and engages through the area circumscribed by sector cavity 206b at the periphery of ring 206. Therefore, rings 206 and 220 - which are on opposite sides of wall 140b - are rotatable relative to one another, by a fraction of a turn between two limit positions corresponding to the angular value associated with the sector cavity 206a, here for example by a quarter of a turn. Rigid spacer washers 226, 228, are provided on opposite sides of ring 220. Socket 218 is engaged by stud 208, the stud 208 being locked in place by a nut 230 threadingly engaging a threaded end portion of socket 218. Stud 208 is not rotatable relative to socket 218, because of the non circular shape of the through-bore in socket 218 and of the non circular cross-section of the body of stud 208.

In operation, there is provided an alternate system for manual clutch override of the strap tightening device clutch 134. In this alternate system, by manually rotating handle 216, lever arm 212 will transmit this torque to the lever arm end socket 218, which will in turn rotate and bring complementarily shaped shaft socket 208 in rotation therewith. Since shafts 204 and 208 are axially offset relative to one another, translational motion will follow at shaft 204, and therefore at gear wheel 144 carried by shaft 204. As gear wheel 144 is displaced in translation, it will move between a first limit position, in which gear 144 meshes with diametrally smaller gear 142 and therefore enables power transmission to drive idle shaft 204, and a second limit position, in which gear 144 clears smaller gear 142 and therefore prevents transmission of power to idle shaft 204. Hence, we obtain the same result as with the cable, slider and spring assembly 90, 82 and 88 of the first embodiment (figure 3), but with different means and in a fashion which would be very reliable in the long run.

Should there be a power shortage or a mechanical breakdown of the motor, the automatic clutch system 62 (fig 9) can be deactivated and the strap tightening system operated completely manually. The tightening device housing is quite compact, having for example the following dimensions: 20 x 20 x 25 centimeters (cm). The main single motor that drives all the tightening devices of a given trailer, may have for example the following dimensions: 15 x 17.5 x 37.5 cm.. The strap tightening devices and the motor can be mounted onto any type of trailer for the transportation of discrete goods or even for a single load unit placed on the trailer platform bed.

The present load tightening system is particularly well suited - but not limited to pallet-supported commercial articles. Moreover, although the present strap tightening system has been disclosed for use with a flat bed trailer for road trucks, it is envisioned to be within the scope of this invention to apply the strap tightening system to cargo storage platform beds available in trains, water vessels and aircrafts.

## Claims

1. A strap tightening system for use in securing a load with a wrap-around flexible strap over a flat bed open trailer (20), said system comprising:
- at least one strap tensioning unit (34), including:
a) a main frame (40), to be mounted to the trailer;
b) a strap winding member (56), rotatably mounted to said main open frame (40) and to be lockingly engageable by one end portion of the strap;
c) a gear assembly (42, 44, 46, 54), rotatably mounted to said main open frame;
- a motor (38), to be mounted to the trailer at a distance from said tensioning unit and to be connected to a power supply;
- **characterized in that** said strap tightening system further comprises a clutch assembly (62), operatively interconnecting said gear assembly (42, 44, 46, 54) and said strap winding member (56) ; and a drive shaft (36), operatively interconnecting said tensioning unit gear assembly (42, 44, 46, 54) and said motor (38), said drive shaft bringing said strap winding member (56)to rotate upon actuation of said motor and rotation of said gear assembly and said clutch assembly (62); wherein upon the load applied by the tightening strap onto said strap winding member exceeding a set load threshold, said clutch assembly disconnects said gear assembly from said strap winding member, whereby transmission of power from said drive shaft to said strap winding member is interrupted.

2. A strap tightening system as in claim 1,
further including a releasable safety ratchet and pawl assembly (54, 57), mounted to said main frame (40)and cooperating with said strap winding member (56), said safety ratchet and pawl assembly (54, 57) preventing said strap winding member from unwinding once said set load threshold has been exceeded.

3. A strap tightening system as in claim 2,
further including a rail member (33), said rail member (33) including a first portion, to be anchored to the trailer flat bed in a fore and aft direction, and a second portion, slidingly retaining said strap tensioning unit open frame (34), wherein the relative position of said strap tensioning unit device (34) can be slidingly adjusted along the length of the trailer (20) in accordance with the relative position on the trailer bed of the load to be secured.

4. A strap tightening system as in claim 3,
wherein there are at least a few strap tensioning units (34), located spacedly from one another and adjustably movable relative to one another along said rail member (33).

5. A strap tightening system as in claim 2,
further including a manual clutch release member (80), for manually disconnecting said gear assembly (42, 44, 46, 54) from said strap winding member (56).

6. A strap tightening system as in claim 2,
further including a manual strap tightening device (134), associated with said strap winding member (156), for tightening the strap independently of said drive shaft (204).

7. A strap tightening system as in claim 2,
further including an adjustment member (66, 68, 71), mounted into said clutch assembly (62) for adjustably varying the magnitude of said set load threshold.

8. A strap tightening system as in claim 2,
wherein said gear assembly (42, 44, 46, 54) includes a ring gear (44), a drive gear (42) integral to said drive shaft (36)and intermeshing with said ring gear (44); and wherein said clutch assembly (62) includes a clutch casing (64), mounted radially inward of said ring gear, said clutch casing (64) including a number of radial recesses (66), a biasing member (68) fully engaged into each of said radial recesses, and a bearing member (70) mounted into each of said radial recesses (66) radially outwardly of said biasing member, said ring gear (44) defining a radially inner edge portion having a number of cavities (72) in register with corresponding said radial recesses (66), each of said ring gear cavities (72) sized to complementarily accommodate a fraction of a corresponding bearing member (70), each said bearing member biased by a corresponding one of said biasing members (68) radially outwardly toward and against a corresponding one of said ring gear cavities (72), said set load threshold being a function of said blasing member.

9. A strap tightening system as in claim 8,
further including load adjusting set screws (71), each of said set screws mounted into a corresponding one of said radial recesses (66) radially inwardly of said biasing member (68), said set screws (71) enabling an operator to manually adjustably vary said set load threshold.

10. In combination, an open trailer (20) having a flat bed, and a strap tightening system according to claim 1.

11. A method of securing a load on a flat bed trailer (20) with at least one strap tightening unit (34), the strap tensioning unit (34) of the type having a main frame (40), to be mounted to the trailer, a strap winding member (56), rotatably mounted to the main open frame (40) and lockingly engageable by one end portion of the strap, a gear assembly (42, 44, 46, 54), rotatably mounted to said main open frame, and a clutch assembly (62), operatively interconnecting said gear assembly and said strap winding member, wherein said method comprises the following steps:
a) extending the strap transversely over a selected portion of the trailer load carrying bed;
b) fixedly engaging an inner end portion of the strap around said strap winding member (56);
c) applying a rotational force on said strap winding member (56) to tighten said strap against the load on the trailer bed; **characterized in that** said method of securing of load further includes the following additional steps:
d) allowing said clutch assembly (62) to disconnect said gear assembly (42, 44, 46, 54) from said strap winding member (56), once the load applied by the tightening strap onto said strap winding member exceeds a set load threshold;
e) locking said strap winding member at its said set threshold load with a lock member; and
f) releasing said rotational force on said strap winding member.

12. A method of securing a load on a flat bed trailer as in claim 11,
further including the following step (aa), intervening before said step (a):
adjusting the position of said strap tensioning unit (34) lengthwisely along the trailer (20), to register said position with the load on the trailer bed.

13. A method of securing a load on a flat bed trailer as in claim 12,
wherein there are a number of said strap tensioning units (34, 34, ...) ; and further including the following step, intervening between said steps (aa) and (a):
adjusting the positions of the other said strap tensioning units (34) relative to one another, to adapt to the load distribution on the trailer bed.

## Revendications

1. Un système de serrage de courroie destiné à être utilisé pour fixer une charge avec une courroie flexible enveloppante au-dessus d'une remorque ouverte à plateau plat (20), ledit système comprenant :
- au moins une unité tendeuse (34), incluant:
a) un cadre principal (40), devant être monté à la remorque;
b) un organe d'enroulement de courroie (56), monté en rotation audit cadre principal ouvert (40) et engageable par blocage par une portion d'extrémité de la courroie;
c) un assemblage d'engrenages (42, 44, 46, 54), monté en rotation audit cadre principal ouvert;
- un moteur (38), devant être monté à la remorque de manière espacée de ladite unité tendeuse et devant être connecté à une source d'alimentation électrique;
- **caractérisé en ce que** ledit système de serrage de courroie comprend au surplus un assemblage d'embrayage (62), interconnectant de manière opérative ledit assemblage d'engrenages (42, 44, 46, 54) et ledit organe d'enroulement de courroie (56); et un essieu d'entraînement (36), interconnectant de manière opérative ledit assemblage d'engrenages (42, 44, 46, 54) de l'unité tendeuse et ledit moteur (38), ledit essieu d'entraînement amenant ledit organe d'enroulement de courroie (56) à tourner lorsque ledit moteur est actionné et lorsque ledit assemblage d'engrenages et ledit assemblage d'embrayage (62) tournent;
**caractérisé en ce que** lorsque la charge appliquée par la courroie de serrage sur ledit organe d'enroulement de courroie excède un seuil de charge fixé, ledit assemblage d'embrayage déconnecte ledit assemblage d'engrenages dudit organe d'enroulement de courroie, où la transmission de puissance dudit essieu d'entraînement audit organe d'enroulement de courroie est interrompue.

2. Un système de serrage de courroie selon la revendication 1,
incluant au surplus un assemblage de rochet et de cliquet (54, 57), monté audit cadre principal (40) et coopérant avec ledit organe d'enroulement de courroie (56), ledit assemblage de rochet et de cliquet (54, 57) empêchant ledit organe d'enroulement de courroie de se dérouler une fois que ledit seuil de charge fixé a été excédée.

3. Un système de serrage de courroie selon la revendication 2,
incluant au surplus un organe de rail (33), ledit organe de rail (33) incluant une première portion, devant être ancrée au plateau plat de la remorque dans une direction d'avant en arrière, et une seconde portion, retenant en coulissement ledit cadre ouvert de ladite unité tendeuse de courroie (34), **caractérisé en ce que** la position relative dudit dispositif d'unité tendeuse (34) peut être ajusté en coulissement sur la longueur de la remorque (20) conformément à la position relative sur le plateau de la remorque de la charge être fixée.

4. Un système de serrage de courroie selon la revendication 3,
**caractérisé en ce qu'**il y a au moins quelques unités tendeuse de courroie (34), positionnées de manière espacée les unes des autres et pouvant être mues de manière ajustable relativement les unes aux autres à l'autre le long dudit organe de rail (33).

5. Un système de serrage de courroie selon la revendication 2,
incluant au surplus un organe de relâchement manuel d'embrayage (80), pour déconnecter manuellement ledit assemblage d'engrenages (42, 44, 46, 54) dudit organe d'enroulement de courroie (56).

6. Un système de serrage de courroie selon la revendication 2,
incluant au surplus un dispositif manuel de serrage de courroie (134), associé avec ledit organe d'enroulement de courroie (156), pour serrer la courroie indépendamment dudit essieu d'entraînement (204).

7. Un système de serrage de courroie selon la revendication 2,
incluant au surplus un organe d'ajustement (66, 68, 71), monté dans ledit assemblage d'embrayage (62) pour varier de manière ajustable l'amplitude dudit seuil de charge fixé.

8. Un système de serrage de courroie selon la revendication 2,
**caractérisé en ce que** ledit assemblage d'engrenages (42, 44, 46, 54) comprend une roue dentelée annulaire (44), une roue dentelée d'entraînement (42) intégrale audit essieu d'entraînement (36) et s'engrenant avec ladite roue dentelée annulaire (44); et **en ce que** ledit assemblage d'embrayage (62) inclut un boîtier d'embrayage (64), monté radialement vers l'intérieur de ladite roue dentelée annulaire, ledit boîtier d'embrayage (64) incluant un nombre d'ouvertures radiales (66), un organe de contrainte (68) complètement engagé dans chacune des desdites ouvertures radiales, et un organe de roulement à bille (70) monté dans chacune desdites ouvertures radiales (66) radialement vers l'extérieur dudit organe de contrainte, ladite roue dentelée annulaire définissant une portion de rebord radialement intérieure possédant un nombre de cavités (72) alignées avec desdites ouvertures radiales (66) correspondantes, chacune desdites cavités (72) de la roue dentelée annulaire étant dimensionnées pour contenir de manière complémentaire une fraction d'un organe de roulement à bille (70) correspondant, chacun desdits organes de roulement à bille étant contraint par l'un des organes de contrainte (68) radialement vers l'extérieur envers et contre l'une correspondante desdites cavités de la roue dentelée annulaire (72), ledit seuil de charge fixé étant fonction dudit organe de contrainte.

9. Un système de serrage de courroie selon la revendication 8,
incluant au surplus des vis d'ajustement de charge (71), chacune desdites vis d'ajustement étant montée dans l'une correspondante desdites ouvertures radiales (66) radialement vers l'intérieur dudit organe de contrainte (68), lesdites vis d'ajustement (71) permettant à un opérateur de varier manuellement de façon ajustable ledit seuil de charge fixé.

10. En combinaison, une remorque ouverte (20) possédant un plateau plat, et un système de serrage de courroie selon la revendication 1.

11. Une méthode d'attache d'une charge sur une remorque à plateau plat (20) avec au moins une unité tendeuse de courroie (34), l'unité tendeuse de courroie (34) étant du type possédant un cadre principal (40), devant être monté sur la remorque, un organe d'enroulement de courroie (56), monté en rotation au cadre principal ouvert (40) et engageable en blocage par une portion d'extrémité de la courroie, un assemblage d'engrenages (42, 44, 46, 54), monté en rotation audit cadre principal ouvert, et un assemblage d'embrayage (62), interconnectant de manière opérative ledit assemblage d'engrenages et ledit organe d'enroulement de courroie; **caractérisé en ce que** ladite méthode comprend les étapes suivantes:
a) étendre la courroie transversalement par-dessus une portion choisie du plateau porteur de charge de la remorque;
b) engager fixement une portion d'extrémité intérieure de la courroie autour dudit organe d'enroulement de courroie (56);
c) appliquer une force rotative sur ledit organe d'enroulement de courroie (56) pour serrer ladite courroie contre la charge sur le plateau de remorque;
**caractérisé en ce que** ladite méthode d'attache d'une charge inclue au surplus les étapes additionnelles suivantes:
d) permettre audit assemblage d'embrayage (62) de déconnecter ledit assemblage d'engrenages (42, 44, 46, 54) dudit organe d'enroulement de courroie (56), une fois que la charge appliquée par la courroie de serrage sur ledit organe d'enroulement de courroie excède un seuil de charge fixé;
e) verrouiller ledit organe d'enroulement de courroie à sa dite charge seuil fixé avec un organe de verrouillage;
f) relâcher ladite force rotationnelle sur ledit organe d'enroulement de courroie.

12. Une méthode d'attache d'une charge sur une remorque à plateau plat selon la revendication 11,
incluant au surplus l'étape suivante (aa), intervenant avant l'étape (a):
ajuster la position de ladite unité tendeuse de courroie (34) longitudinalement le long de la remorque (20), pour aligner ladite position avec la charge sur le plateau de remorque.

13. Une méthode d'attache d'une charge sur une remorque à plateau plat selon la revendication 12,
**caractérisé en ce qu'**il y a un nombre desdites unités tendeuse (34, 34, ...) ; et incluant au surplus l'étape suivante, intervenant entre les étapes (aa) et (a):
ajuster les positions des autres unités de tendeuse de courroie (34) relativement les unes aux autres, pour s'adapter à la distribution de charge sur le plateau de remorque.

## Patentansprüche

1. Ein System, um Bändern für die Sicherung von Ladungen zu spannen, mit einem umlaufenden Band über einem offenen Flachbett Hänger (20), besagtes System bestehend aus:
- wenigstens einer Spanneinheit (34), einschliesslich:
a) einem Hauptrahmen (40), auf dem Hänger montiert;
b) einer Winde (56), drehbar auf dem Hauptrahmen (40) montiert und sperrend verbunden mit einem Ende des Bandes;
c) eines Zahnradsatzes (42, 44, 46, 54), drehbar montiert auf dem genannten Hauptrahmen;
- einem Motor (38), auf dem Hänger mit einem Abstand zur besagten Spanneinheit montiert und mit einer Stromversorgung verbunden;
- dieses besagte Spannsystem beinhaltet weiterhin eine Kupplung (62), die operativ besagten Zahnradsatz (42, 44, 46, 54) und Motor (38) verbindet. Die Antriebswelle bewegt besagte Winde (56) nach Einschalten des besagten Motors und Drehen des besagten Zahnsatzes und Kupplung(62); wenn die Last des Spannsystems auf die besagte Winde eine eingestellte Lastgrenze übersteigt, löst die besagte Kupplung den Zahnradsatz von der Winde und die übertragene Kraft der Antriebswelle auf die Winde unterbrochen wird.

2. Ein Spannsystem für Bänder wie in Forderung 1,
weiterhin mit einer lösbaren Einheit Sicherheitsknarre und Sperre (54, 57), am besagten Hauptrahmen (40) angebracht und verbunden mit besagter Winde (56). Die besagte Einheit Sicherheitsknarre und Sperre (54, 57) verhindert, dass die Winde sich abwickelt, wenn die besagte Lastgrenze überschritten wurde.

3. Ein Spannsystem für Bänder wie in Forderung 2,
weiterhin mit einer Schieneneinheit (33). Die besagte Schieneneinheit (33) schliesst einen ersten Teil ein, der am Bett des Hängers in Längsrichtung montiert ist, und einen zweiten Teil, gleitend den Rahmen (34) der besagten Spanneinheit haltend, wobei die relative Position der besagten Spanneinheit (34) gleitend eingestellt werden kann über die Länge des Hängers (20) entsprechend der relativen Position der zu sichernden Ladung auf dem Hängerbett.

4. Ein Spannsystem für Bänder wie in Forderung 3,
die wenigstens einige Spannvorrichtungen (34) hat, in einem Abstand zueinander und beweglich einstellbar relativ zueinander entlang der Schieneneinheit (33).

5. Ein Spannsystem für Bänder wie in Forderung 2,
weiterhin eine Einheit für das manuelle Lösen der Kupplung (80), um manuell die Zahnradeinheit (42, 44, 46, 54) von der Winde (56) zu lösen.

6. Ein Spannsystem für Bänder wie in Forderung 2,
weiterhin eine manuelle Spanneinheit (134), verbunden mit der Winde (156), um das Band unabhängig von der Antriebswelle (204) zu spannen.

7. Ein Spannsystem für Bänder wie in Forderung 2,
weiterhin eine Einstelleinheit (66, 68, 71), montiert in besagte Kupplungseinheit (62) um die Grösse der besagten Lastgrenze zu verändern.

8. Ein Spannsystem für Bänder wie in Forderung 2,
wobei die besagte Zahnradeinheit (42, 44, 46, 54) einen Zahnring (44), ein Antriebszahnrad (42), fest verbunden mit der Antriebswelle (36) und eingreifend in besagten Zahnring (44), beinhaltet; und wobei besagte Kupplungseinheit (62) ein Kupplungsgehäuse (64) beinhaltet, radial nach innen in besagten Zahnring montiert. Das besagte Kupplungsgehäuse (64) hat einige radiale Aussparungen (66), eine Vorspanneinheit (68), voll eingreifend in jede der besagten Aussparungen, und eine Lagerung (70), in jede der besagten Aussparungen (66) montiert, radial nach aussen der besagten Sperre. Der besagte Zahnring (44) definiert einen radialen inneren Rand mit einer Zahl von Aussparungen (72) übereinstimmend mit den besagten radialen Aussparungen (66), jede der besagten Zahnring-Aussparungen (72) in komplementärer Grösse, um einen Teil des entsprechenden Lagerung (70) aufzunehmen. Jeder der besagten Lagerungen ist radial nach aussen gespannt durch einen der besagten Spanneinheiten (68) gegen einen entsprechenden der besagten Zahnring-Aussparungen (72). Die besagte Lastbegrenzung ist eine Funktion der besagten Vorspanneinheit.

9. Ein Spannsystem für Bänder wie in Forderung 8,
weiterhin Einstellschrauben (71) für die Last, jede der besagten Schrauben in eine der besagten Vertiefungen (66) radial nach innen der besagten Einheit (68) montiert. Besagte Stellschrauben (71) ermöglichen dem Bediener die manuelle Einstellung der besagten Lastgrenze.

10. In Kombination, ein offener Hänger (20) mit flachem Bett und ein Spannsystem für Bänder entsprechend Forderung 1.

11. Eine Methode, eine Ladung auf einem Flachbett Hänger (20) zu sichern mit mindestens eine Spanneinheit (34), einer Spanneinheit (34) vom Typ mit Hauptrahmen (49), auf dem Hänger montiert, einer Winde (56), drehbar auf dem Hauptrahmen (40) montiert und sperrend verbunden mit einer Seite des Bandes, einer Zahnrad Einheit (42, 44, 46, 54), drehbar montiert zu besagtem Hauptrahmen, und einer Kupplung (62), operativ verbunden mit besagter Zahnrad Einheit und besagter Winde, wobei besagte Methode wie in den folgenden Schritten beschrieben, abläuft:
a) das Band transversal über einen gewählten Teil des die Ladung aufnehmenden Bettes des Hängers führen;
b) das innere Ende des Bandes um die besagte Winde (56) befestigen;
c) eine rotierende Kraft auf die Winde (56) aufbringen, um das besagte Band gegen die Ladung auf dem Hängerbett zu spannen; diese Methode schliesst folgende zusätzliche Schritte ein:
d) der besagten Kupplung (62) erlauben, die besagte Zahnradeinheit (42, 44, 44,46, 54) von der Winde (56) zu lösen, wenn die Last, die auf das gespannte Band auf der Winde ausgeübt wird, die Lastgrenze überschreitet;
e) die besagte Winde bei der Lastgrenze mit einer Sperreinrichtung zu sperren; und
f) die rotative Kraft an der Winde zu lösen.

12. Eine Methode, eine Last auf einem Flachbett eines Hängers zu sichern, wie in Forderung 11, weiterhin mit folgendem Schritt (aa), vor besagtem Schritt (a):
Die Position der besagten Spanneinheit (34) in Längsrichtung auf dem Hänger (20) einstellen, um die Position mit der Last auf dem Hänger überein zu bringen.

13. Eine Methode, eine Last auf einem Flachbett eines Hängers zu sichern, wie in Forderung 12, weiterhin gibt es eine Anzahl besagter Spannvorrichtungen (34, 34, ...); und weiterhin den folgenden Schritt, zwischen besagte Schritten (aa) und (a) auszuführen: Einstellen der Positionen der besagten Spanneinheiten (34) relativ zueinander, um der Verteilung der Ladung über dem Hängerbett angepasst zu werden.
